# EUROPEAN PATENT APPLICATION

(11) **EP 1 577 051 A2**
(43) Date of publication of application: **21.09.2005**
(21) Application number: 05251557.4
(22) Date of filing: 15.03.2005
(51) Int. Cl.: B23Q 1/00, F16M 7/00, B23Q 1/26, B23Q 3/18

(54) **System, method and apparatus for adjusting platforms**

(30) Priority: 15.03.2004 US 801463
(71) Applicant: Fadal Engineering Company, Inc., Chatsworth, CA 91311 (US)
(72) Inventor: Gibson, Dean J., Canyon Country, California 91351 (US)
(74) Representative: Ertl, Nicholas Justin

(57) **Abstract**

A device is presented having an adjusting element with many adjusting holes within in a first portion and a second portion removably connected to an insert. The device also has a pad housing having a first side, a second side and an adjusting hole in the first side. A third portion of the adjusting element is rotatably connected to the pad housing through the adjusting hole. A pad is removably connected to the pad housing through a cavity in a second side of the pad housing. The pad has at least one lubricant groove with a fill hole at one end. The pad further including a top portion and a lower portion. The third portion of the adjusting element rotates within the adjusting hole.

## Description

### BACKGROUND

### Field

This invention relates to adjusting platforms, and more particularly to an adjusting/squaring system, method and apparatus.

### Description of the Related Art

Equipment designed to work at specific tolerances, for example machining centers, require tolerances based on end product manufacturing capabilities that must meet certain specific tolerances. Typically, a machining center must be assembled and checked to meet specific tolerances. If necessary, disassembled and reworked to meet those specific tolerances. The parts must then be reworked by grinding, re-machining or hand-scraping, and reassembled to determine if the sample meets specific tolerances. This regrinding, re-machining, or hand-scraping procedure is usually performed over and over until tolerances are met. The problem with regrinding, re-machining, or hand scraping, however, is the amount of time needed to set-up a device, and the accuracy limitation.

### SUMMARY

In one embodiment, a device is presented including an adjusting element having a plurality of adjusting holes in a first portion, and having a second portion removably coupled to an insert. A pad housing having a first side, a second side and an adjusting hole in the first side, where a third portion of the adjusting element is removably coupled to the pad housing through the adjusting hole. A pad is removably coupled to the pad housing through a cavity in a second side of the pad housing. The pad having at least one lubricant groove leaving a fill hole at one end of the lubricant groove. The pad further including a top portion and a lower portion. The adjusting element rotates within the adjusting hole.

In another embodiment, a system is presented that comprises a plurality of adjusting devices coupled to a platform. A device is coupled to each of the plurality of adjusting deuces. Each of the plurality of adjusting devices adjusts position of the device relative to the platform to square the device.

In still another embodiment, a method is presented including leveling a platform coupled to a device, the device including a plurality of adjusting elements disposed within the device. Positioning a pallet on the device. Adjusting each one of the plurality of adjusting elements until a predetermined measurement is reached on a measuring device. Each of said plurality of adjusting elements coupled to a pad. Each pad disposed between the platform and the device. Removing a predetermined portion of the pallet along a first edge and a second edge of the pallet with a material removal device. The removing is performed at a predetermined depth and width for a predetermined number of passes until said predetermined portion is removed from the first edge and the second edge of the pallet. Rotating the pallet to a first predetermined angle and a second predetermined angle. Measuring displacement with the measuring device for a predetermined length on the first edge and the second edge at the first predetermined angle and the second predetermined angle. Readjusting each of the plurality of adjusting elements until the measured displacement for the first edge and the second edge are opposite and equal when measured at the first predetermined angle and the second predetermined angle.

Still another embodiment is presented including a horizontal machining center (HMC) system including a plurality of adjusting elements coupled to a platform within the HMC. A rotating table is coupled to each of the plurality of adjusting elements. Each of the plurality of adjusting elements adjusts position of the device relative to the platform to square the device.

### BRIEF DESCRIPTION OF THE DRAWINGS

The embodiments are illustrated by way of example and not by way of limitation in the figures of the accompanying drawings in which like references indicate similar elements. It should be noted that references in the specification to "an embodiment," "one embodiment," "some embodiments," or "other embodiments" means that a particular feature, structure, or characteristic described in connection with the embodiments is included in at least some embodiments, but not necessarily all embodiments, of the invention. The various appearances "an embodiment," "one embodiment," or "some embodiments," are not necessary all referring to the same embodiments. If the specification states a component, feature, structure, or characteristic "may", "might", or "could" be included, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.
Figure 1 illustrates an exploded side view of an embodiment.
Figure 2A illustrates an exploded side view of a pad housing and pad of an embodiment.
Figure 2B illustrates an exploded side view of an adjusting element of an embodiment.
Figure 2C illustrates a non-exploded side view of an adjusting element of an embodiment.
Figure 2D illustrates a bottom view of pad housing and pad of an embodiment.
Figure 2E illustrates an internal cross section view of pad housing and pad of an embodiment.
Figure 3 illustrates an exploded side view of a system including a plurality of the embodiment illustrated in Figure 1.
Figure 4A illustrates a bottom view of a system including a plurality of the embodiment illustrated in Figure 1 without pads inserted into pad housings.
Figure 4B illustrates a bottom view of a system including a plurality of the embodiment illustrated in Figure 1 with pads inserted into pad housings.
Figure 5 illustrates a side view of a system including a plurality of the embodiment illustrated in Figure 1.
Figure 6 illustrates a side view of a horizontal machining center to include the system illustrated in Figure 3.
Figure 7 illustrates a process for squaring a device.

### DETAILED DESCRIPTION

The invention generally relates to. Referring to the figures, exemplary embodiments of the invention will now be described. The exemplary embodiments are provided to illustrate the invention and should not be construed as linuting the scope of the invention.

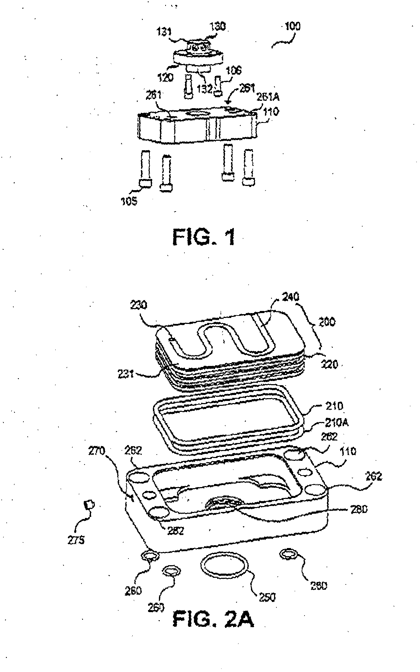

Figure 1 illustrates an exploded side view of one embodiment. Device 100 includes adjusting element 130 having a plurality of adjusting holes in a first portion, and having a second portion removably coupled to insert 120. Device 100 further includes pad housing 110 (also known as a way pad housing) having a first side, a second side and an adjusting hole (reference numeral 280 in Figure 2A) in the first side. Adjusting element 130 is removably coupled to pad housing 110 through fasteners 106. Third portion 132 of adjusting element 130 is rotatably coupled to pad housing 110 through adjusting hole 280. Pad 200 (illustrated in Figure 2A; also known as a way pad) is removably coupled to pad housing 110 through a cavity in a second side of pad housing 110. Pad 200 has at least one lubricant groove 240 (illustrated in Figure 2A) having fill hole 230 (illustrated in Figure 2A) at one end of lubricant groove 240. Lubricant, such as oil, synthetic oil, etc., fills lubricant groove 240 from fill hole 230.

O-ring 210 (illustrated in Figure 2A) is coupled to pad 200. Adjusting element 130 to rotate within adjusting hole 280 to either raise or lower third portion 132 of adjusting element 130 within pad housing 110. In one embodiment pad housing 110 can be coupled to a platform or device with fasteners 105. In one embodiment, fasteners 105 and 106 are threaded fasteners, such as bolts, screws, etc. In one embodiment fasteners 105 and 106 are made of a metal, such as stainless steel, hardened steel, etc. In another embodiment, fasteners 105 and 106 are made of a metal alloy.

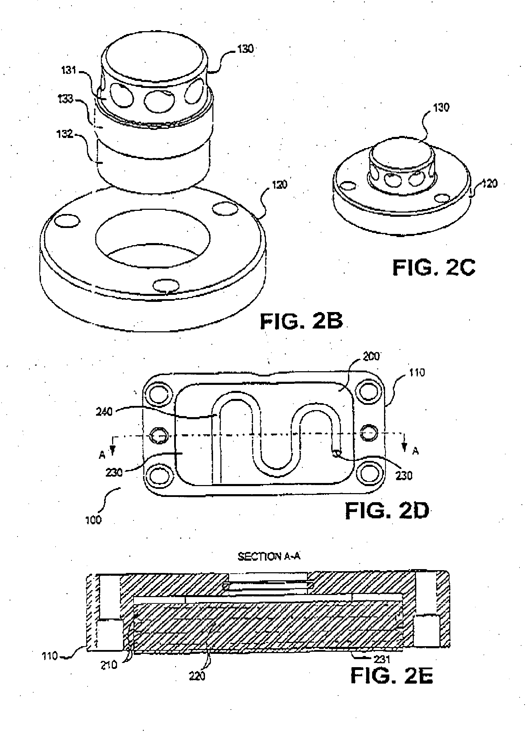

Figure 2B illustrates adjusting element 130 with first portion 131, second portion 133 and third portion 132 where adjusting element 130 is illustrated in exploded form above insert 120. Figure 2C illustrates adjusting element 130 coupled with insert 120. In one embodiment, adjusting element 130 includes threaded grooves disposed between first portion 131 and second portion 132. As first portion 131 of adjusting element 130 is rotated, third portion 132 either threads up or down, depending on the direction of rotation. Second portion 133 acts as a coupler between first portion 131 and third portion 132.

Figure 2D illustrates a bottom side view of device 100 with pad 200 disposed within pad housing 110. Figure 2E illustrates an internal cross section view of section A-A illustrated in Figure 2D.

In one embodiment, pad housing 110 is made of a metal, such as stainless steel, hardened steel, etc. In another embodiment, pad housing 110 is made of a metal alloy. In one embodiment, adjusting element 130 is made of a metal, such as stainless steel, hardened steel, etc. In another embodiment, adjusting element 130 is made of a metal alloy.

As illustrated in Figure 2A, pad 200 includes top portion 231 and lower portion 220. In one embodiment, top portion 231 is made of metal, such as stainless steel, hardened steel, etc. In another embodiment, top portion 231 is made of a metal alloy. In one embodiment lower portion 220 is a semi fluid, such as Moglice® (e.g., Moglice 628, etc.). In one embodiment lower portion 220 has the consistency of a thin putty and tends to run on a vertical surface with minimal damming required, but will not run off a flat way.

Pad housing 110 also indudes a plurality of through holes 262 for fasteners 105 to couple pad housing 110 to a device or platform. O-ring 250 is disposed between, pad housing and the liner. O-ring 250 forms a snug fit between adjusting hole 280 and third portion of adjusting element 130. O-ring 250 can be standard o-rings known to those skilled in the art. Pad housing 110 further includes a plurality of o-rings 260 that are removably coupled to a plurality of through holes 261 in the back of the pad housing 110 (See Figure 1). O-rings 261 form a snug fit between through holes 261. The O-rings create a seal between pad housing 110 and pad 200. O-rings 261 and 210A are used to seal the gap created in the bottom of pad housing 110 and between the pad 200. This gap is later filled With Moglice ®DWH311, or similar material. O-ring 261A seals the lubricating oil's path within through hole (transfer hole) 270 to the area sealed by O-rings 210 and 210A and out fill hole 230. Oil travels through groove 240 lubricating surface 231. O-rings 261 and 210A can be standard o-rings known to those skilled in the art.

Pad housing 110 has a raised interior portion, wherein a gap is formed between the raised interior portion and pad 200 when inserted in pad housing 110. The gap formed on completion of the squaring process is filled with fill material, such as Moglice ®DWH311, or similar material, through ports 325 and 325A. The Moglice®, when cured, will create one solid body of 310, 220 and 110.

Set-screw 275 is removably coupled to through hole 270 within pad housing 110. Set screw 275 seals the oil cross transfer hole allowing oil to travel from fitting 261B, through 261A, through through-hole 270 and finally out fill hole 230.

Adjusting element 130 when rotated in one direction extends into the cavity, and when rotated in an opposite direction, withdraws from the cavity. That is, adjusting element 130 travels within the cavity to press against pad 200. When pad 200 is coupled to a platform (e.g., the ground, a table, etc.), rotating adjusting element in one direction will cause adjusting element 130 to press against pad 200 to displace pad 200 from a first position within pad housing 110. The rotation of adjusting element 130 therefore adjusts a position of pad 200 within pad housing 110 where pad housing is in contact with a platform (e.g., the ground, a table, a solid platform, etc.).

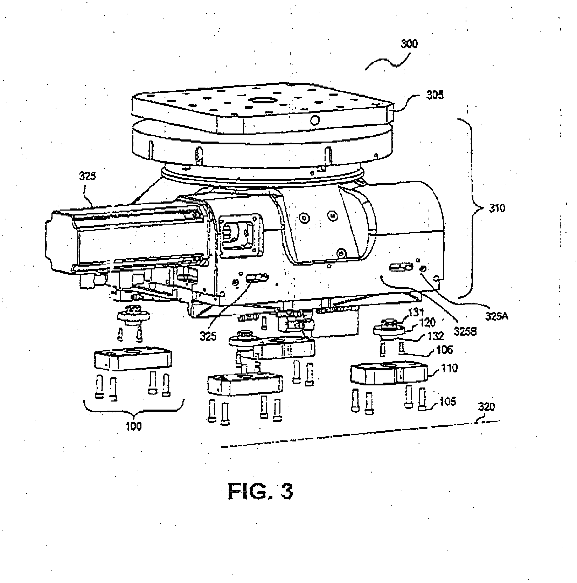

Figure 3 illustrates system 300 including a plurality of adjusting devices 100 coupled to platform 320. It should be noted that while four (4) adjusting devices 100 are illustrated, other numbers of adjusting devices 100 can be employed as needed (e.g., 2, 3, 5, 6, etc.). Device 310 is coupled to each of the plurality of adjusting devices 100. In one embodiment adjusting devices 100 are located substantially at each of device 310's respective lower corners. Each of the plurality of adjusting devices 100 are independently adjustable to adjust position of device 310 relative to platform 320 to square device 310. Each adjusting device 100 has an adjusting element 130. Adjusting element 130 has an upper portion 131 having a plurality of through, holes. The plurality of through holes in adjusting element 130 are accessible through openings 325. An instrument, such as a screwdriver, can be inserted into a though hole of adjusting element 130 and by applying force adjusting element 130 is rotated. The rotation of adjusting element 130 adjusts the position of pad 200 within pad housing 110. This in turn raises or lowers a respective corner of device 310.

Each of the plurality of adjusting devices 100 include pad housing 110 coupled to platform 320- Pad housing 110 has a first side, a second side and adjusting hole 280 in the first side. The first side of pad housing 110 is coupled to device 310 through fasteners 105. Inserts 120 are removably coupled to system 300. Adjusting element 130 having a plurality of adjusting holes in first portion 131 is rotatably coupled to pad housing 110 through adjusting hole 280. Pad 200 is removably coupled to pad housing 110 through a cavity in the second side of pad housing 110. Pad 200 has at least one lubricant groove 240 having fill hole 230 at one end- In one embodiment, lubricant groove 240 is serpentine shaped. In another embodiment, lubricant groove zigzag shaped. It should be noted that lubricant groove 240 can be other shapes as long as lubricant can flow within lubricant groove 240 and lubricate multiple portions of top portion 231. Pad 200 further includes top portion 231 and lower portion 220.

In system 300 each of adjusting devices 100 (discussed above) have adjusting element 130, which rotates within adjusting hole 280 and adjusts position of device 310 relative to platform 320. In one embodiment, platform 320 is disposed within a horizontal machining center (HMC). In this embodiment, platform 320 is mounted to a floor of the HMC. In one embodiment HMC is a Fadal, Inc. HMC-400.

In one embodiment device 310 is a rotating table having a top platform portion 305. In this embodiment the rotating table can rotate 360 degrees relative to the platform horizontally. It should be noted in this embodiment device 310 can slideably move along track 325 to change the center point of top platform 305.

In one embodiment device 310 is a lathe (not shown). In another embodiment device 310 is a sawing device (not shown), such as a rotating band saw. In another embodiment device 310 is a drilling device, such as a rotary drill, drill press. In yet another embodiment device 310 is an alignment device, such as an earth positioning system. It should be noted that in other embodiments device 310 can be any device that typically requires squaring before use.

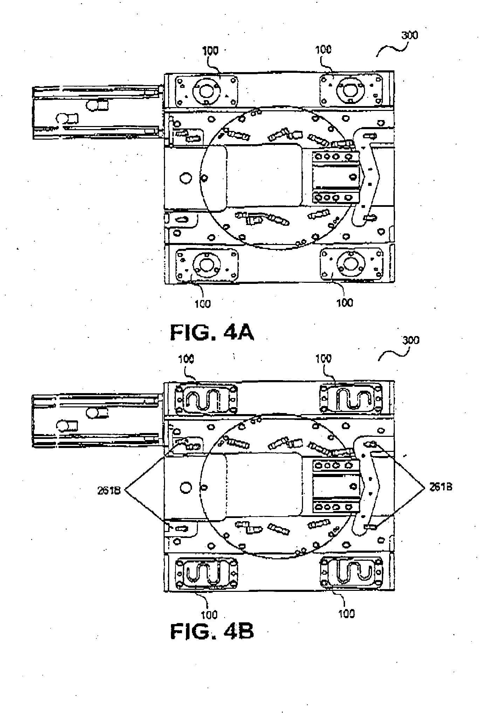

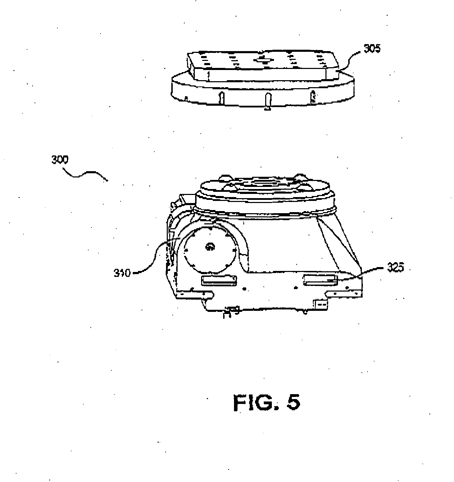

Figure 4A illustrates a bottom view of system 300 having adjustment devices 100 with pad 200 removed from pad housing 110. Figure 4B illustrates a bottom view of system 300 having adjustment devices 100 with pad 200 disposed within pad housing 110. Figure 5 illustrates a side view of system 300.

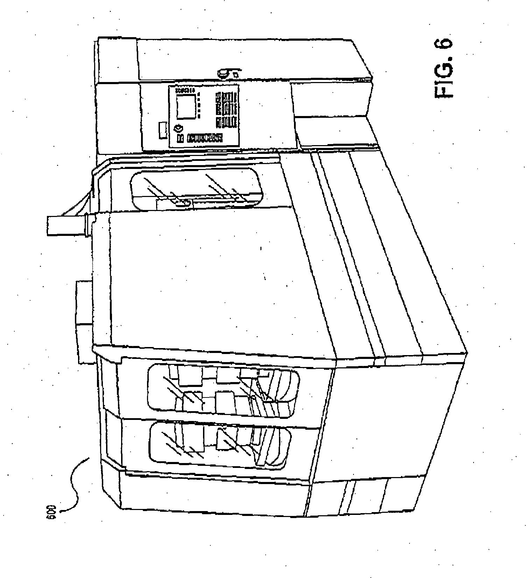

Figure 6 illustrates horizontal machining center (HMC) system 600. HMC 600 includes the embodiments illustrated in Figures 1-5 as discussed above. In particular, HMC 600 includes plurality of adjusting devices 100 coupled to platform 320 disposed within HMC 600. In one embodiment HMC 600 is a Fadal, Inc. HMC-400 series device. Also included in HMC 600 is rotating table 300 coupled to each of the plurality of adjusting devices 100. Each of the plurality of adjusting devices adjusts position of rotating table 300 relative to platform 320 to square rotating table 300. It should be noted that before HMC 600 is prepared to begin machining, rotating table 300 must be squared in order to achieve proper machining (i.e., to machine material to desired tolerances). Once adjusting elements 100 are adjusted to achieve proper squaring to within desired tolerances (e.g., 0 - 0.0001 over a 10 inch square surface).

It should be noted that HMC 600 further includes a command center coupled to a plurality of controllers. The command center having a user input device (e.g., a keypad and keyboard, mouse, etc.) and a display (e.g., a monitor). A plurality of sensors are coupled to rotating table 300 and a plurality of servos. A plurality of motors are coupled to the plurality of controllers. A spindle is coupled to rotating table 300. A horizontal track is coupled to the rotating table to allow horizontal movement along with the rotational movement.

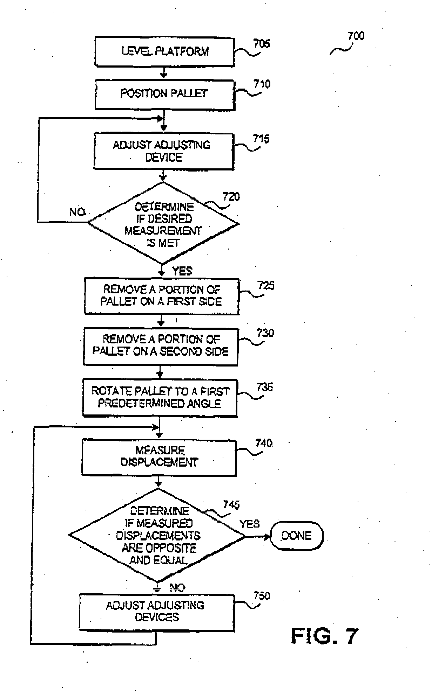

Figure 7 illustrates process 700 for squaring a device. Process 700 begins with leveling a platform. This includes typical leveling operations to ensure the platform is leveled (e.g., a platform mounted within an HMC). Once the platform is leveled, process 700 continues with operation 710, which includes positioning a pallet on the platform (e.g., device 300). The device (e.g., device 300) includes a plurality of adjusting device 100 disposed within the device. After the operation 710 is completed, process 700 continues with operation 715.

Operation 715 includes adjusting the plurality of adjusting devices (e.g., adjusting devices 100). All adjusting elements 130 of adjusting device 100 first must be completely backed off (i.e., set to the lowest position within adjusting hole 280. Process 700 continues with operation 720 determining whether a desired measurement has been met For operation 720, a measuring device, such as a dial indicator, is placed on the pallet directly above a first adjusting device The adjustment device is then rotated until the adjusting element is lowered to cause the pallet to rise .0005 inches. This is repeated for all of the adjustment devices (e.g., four adjustment devices 100). After all of the adjustment devices have been adjusted to raise the respective pallet locations 0005 inches (i.e., all four corners), it should be verified (i.e., visual inspection) that each pad (i.e. pad 200) is touching the way surface (i.e. the platform) by lowering adjusting element 130 .0005 inches and raising the adjusting element 130 back up .0005 inches. This is repeated for all adjustment devices 100 (e.g., four adjustment devices 100)- If one adjustment device 100 cannot be lowered .0005 inches, then the pallet at the respective adjustment device should be raised an additional .0001 inches until all the measured pallet positions (e.g., the four corners) can be raised and lowered .0005 inches. It should be noted that several iterations may be required. If after several iterations the adjustment devices cannot be lowered and raised .0005 inches, the adjustment devices should all be backed off again and the operation of raising the pallet .0005 inches should be started over. Therefore, if it is determined that the desired measurement is met, process 700 continues with operation 725. Otherwise, operation 715 is repeated until operation 720 is satisfied. It should be noted that other increments can be used for the raising and lowering in other embodiments depending on desired tolerances.

If operation 720 is satisfied, a material removal/altering device must be set up (i.e., dressed). For example, a grinding wheel. Process 700 continues with operation 725 where a predetermined portion of the pallet is removed along a first edge and a second edge with a material removal/altering device. In one embodiment where a grinder is employed as the material removal/altering device, removing is performed by grinding a 1/2 inch wide strip on the top of the pallet surface along an edge closest to the spindle. For example, grinding may be done at 1200 RPM @ 50 IP. In one embodiment, the depth of the grinding should be at 0.0001 inches increments. In one embodiment, five (5) passes are made back and forth at 0.100 inch until the 1/2 inch strip of the pallet surface is ground. Several sets of passes may be necessary for the 1/2 inch strip of the surface of the pallet to be ground on the first edge. It should be noted that other increments can be used for other embodiments depending on desired tolerances.

Next operation 730 is made by rotating the pallet +90 degrees, and removing a 1/2 inch strip as in operation 725. After operation 730 is completed, process 700 continues with operation 735. In operation 735, the pallet is rotated to +180 degrees. Displacement is measured with the dial indicator measuring device for a predetermined length (e.g., 10 inches) on the first edge and the second edge. The pallet should then be rotated to 0 degrees and displacement should be measured again for a predetermined length (e.g., 10 inches). Next operation 745 is began where it is determined whether the measured displacements are equal and opposite. For the device to be squared, the displacement measurements at the +180 degree setting and 0 degree setting should be opposite and equal. For example, if in the 0 degree position a measurement is taken, and at one end of the table the measuring device is set at 0 and 10 inches, from there if another measurement is taken and measures .002, when the pallet is rotated 180 degrees the measurements should read .002 at the 0 position and 0 at the .002 position. This indicates that the axis is square to surface 320. This is for the 90 degree material removal and the 270 degree measurement also.

If operation 745 is satisfied (i.e., the displacements measured are equal and opposite), process 700 is complete and the device is squared. If operation 745 is not satisfied, process 700 continues with operation 750. In operation 750 each of the plurality of adjusting devices are readjusted until the measured displacement for the first edge and the second edge are opposite and equal when measured at the first predetermined angle and the second predetermined angle. That is, operation 740 and 745 are once again performed after the adjusting devices are adjusted. Once operation 745 is satisfied, verification should be made to ensure that each pad (i.e., pad 200) is in contact with the way surface (i.e., the platform). This is done by lowering each adjusting element 0.0001 inches and then raising it back up 0.0001 inches. If any one of the adjusting elements cannot be lowered 0.0001 inches, then it was not in contact with the way surface (i.e. platform). It should be noted that whenever the adjusting element is lowered, the adjusting element backlash should be removed. In order to remove the backlash, the pallet should first be lowered 0.0001 inches more than the desired target leveL and then raising the adjusting element back up 0.0001 inches to the target level. For example, if a target level requires lowering by 0.0001 inches, then the pallet should be lowered 0.0002 inches, and then raised to 0.0001 inches to end up at the target level.

After process 700 is completed, another operation (not shown) is locking the pads in place. Locking each pad in place includes filling a cavity surrounding the pad with an adhesive, for example epoxy. The epoxy will harden locking the pad in place to ensure squaring will not fall out of tolerance. It should be noted that if the pads are damaged Or worn, the pads can be removed, fill holes 325A and 325B cleaned out and new pads installed. All four (as in this case) must be done at the same time. Process 700 would have to then be performed again.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other modification may occur to those ordinarily skilled in the art.

## Claims

1. An apparatus comprising:
an adjusting element having a plurality of adjusting holes in a first portion, and having a second portion removably coupled to an insert;
a pad housing having a first side, a second side and an adjusting hole in the first side, a third portion of the adjusting element rotatably coupled to the pad housing through the adjusting hole; and
a pad removably coupled to the pad housing through a cavity in a second side of the pad housing, the pad having at least one lubricant groove having a fill hole at one end of the lubricant groove, the pad further including a top portion and a lower portion, wherein the third portion of the adjusting element rotates within the adjusting hole.

2. The apparatus of claim 1, the pad housing including a plurality of through holes.

3. The apparatus of claim 1 or 2, further including an o-ring disposed between the pad housing and the pad.

4. The apparatus of claim 2, further including a plurality of o-rings removably coupled to the plurality of through holes.

5. The apparatus of any preceding claim, the pad housing having a raised interior portion, wherein a gap is formed between the raised interior portion and the pad.

6. The apparatus of claim 2, further including a set-screw removably coupled to the pad housing through one of the plurality of through holes.

7. The apparatus of any preceding claim, wherein the third portion of the adjusting element rotates in one direction extending the third portion within the cavity and rotates in an opposite direction withdrawing the third portion from the cavity.

8. A system comprising:
a plurality of adjusting devices coupled to a platform;
a device coupled to each of the plurality of adjusting devices;
wherein each of the plurality of adjusting devices adjusts position of the device relative to the platform to square the device.

9. The system of claim 8, each of the plurality of adjusting devices including:
a pad housing coupled to the platform, the pad housing having a first side, a second side and an adjusting hole in the first side, the first side of the pad housing coupled to the device;
an insert removably coupled to the pad housing;
an adjusting element having a plurality of adjusting holes in a first portion and having a second portion removably coupled to the insert, and having a third portion rotatably coupled to the pad housing through the adjusting hole; and
a pad removably coupled to the pad housing through a cavity in the second side of the pad housing, the pad having at least one lubricant groove having a fill hole at one end, the pad further including a top portion and a lower portion.

10. The system of claim 9, wherein each of the adjusting elements rotate within the adjusting hole and adjusts position of the device relative to the platform.

11. The system of claim 9 or 10, the pad housing includes a plurality of through holes.

12. The system of claim 9, further including an o-ring disposed between the pad housing and the pad.

13. The system of claim 11, further including a plurality of o-rings removably coupled to the plurality of through holes.

14. The system of any one of claims 9 to 13, the pad housing having a raised interior portion, wherein a gap is formed between the raised interior portion and the pad.

15. The system of claim 11, further including a set-screw removably coupled to the pad housing through one of the plurality of through holes.

16. The system of any one of claims 9 to 15, wherein the third portion of the adjusting element travels one of within the cavity and out of the cavity as the adjusting element is rotated.

17. The system of any one of claims 8 to 16, wherein the adjusting holes of each adjusting element are accessible through respective openings within the device.

18. The system of any one of claims 8 to 17, wherein the platform is disposed within a horizontal machining center.

19. The system of any one of claims 8 to 18, wherein the device is a rotating table.

20. The system of claim 19, further comprising:
a command center coupled to a plurality of controllers, said command center having a user input device and a display;
a plurality of sensors coupled to the rotating table and a plurality of servos;
a plurality of motors coupled to the plurality of controllers; and
a spindle coupled to the rotating table; and a horizontal track coupled to the rotating table.

21. The system of claim 8, wherein the device is one of a lathe, a sawing device, a drilling device, and an alignment device.

22. A method comprising:
leveling a platform coupled to a device, said device including a plurality of adjusting elements disposed within the device;
positioning a pallet on the device;
adjusting each one of the plurality of adjusting elements until a predetermined measurement is reached on a measuring device, each of said plurality of adjusting elements coupled to a pad, each pad disposed between the platform and the device;
removing a predetermined portion of the pallet along a first edge and a second edge of the pallet with a material removal device, said removing performed at a predetermined depth and width for a predetermined number of passes until said predetermined portion is removed from the first edge and the second edge of the pallet;
rotating the pallet to a first predetermined angle and a second predetermined angle;
measuring displacement with the measuring device for a predetermined length on the first edge and the second edge at the first predetermined angle and the second predetermined angle; and
readjusting each of the plurality of adjusting elements until the measured displacement for the first edge and the second edge are opposite and equal when measured at the first predetermined angle and the second predetermined angle.

23. The method of claim 22, further comprising:
determining if each of the plurality of adjusting elements is in contact with its respective pad.

24. The method of claim 22 or 23, further comprising:
locking each pad in place.

25. The method of claim 24, said locking each pad in place includes filling a cavity surrounding the pad with an adhesive.

26. The method of any one of claims 22 to 25, wherein the device is squared when the measured displacement for the first edge and the second edge are opposite and equal when measured at the first predetermined angle and the second predetermined angle.

27. The method of any one of claims 22 to 26, wherein the material removing device is a grinder.

28. The method of any one of claims 22 to 27, wherein the pallet is one of a metal and metal composite material.
